# EUROPEAN PATENT APPLICATION

(11) **EP 4 624 369 A1**
(43) Date of publication of application: **01.10.2025**
(21) Application number: 24167133.8
(22) Date of filing: 28.03.2024
(51) Int. Cl.: B65G 1/04

(54) **A CONTAINER HANDLING STATION**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

The disclosure relates to a container handling station, the container handling station comprising: a plurality of supports, each support configured to hold a transport device for one or more storage containers; the plurality of supports arranged on and configured to rotate about a vertical support axis.

## Description

### TECHNICAL FIELD

The disclosure relates to a container handling system. More particularly, it relates to a container handling system comprising a plurality of supports configured to rotate about a support axis, an automated container storage and retrieval system which comprises the container handling system and a method for handling a storage container stack stored in an automatic container storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are re-stocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Stations at the periphery of the grid can be used to enable an efficient flow of storage containers in and out of the system. The container-handling vehicles can be configured to transport containers between the grid and the stations at the periphery of the grid so that storage containers can be transferred in and out of the system with minimal human intervention.

One known storage container station comprises a rotatable carousel with supports each configured to hold a single storage container, and a picker arm for moving objects between containers. Such a station can increase robot traffic at the edges of the system due to the increased robot movement in these areas required to transfer single containers between the grid and the station.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a perspective view of a storage system comprising a container handling station configured to move one or more containers in and/or out of the system;
Fig. 5B shows a top view of the system of Fig. 5a;
Fig. 5C shows a perspective view of the storage system of Fig. 5A wherein the container handling system has received a transport device with one or more containers;
Fig. 5D shows a perspective view of the storage system of Fig. 5A wherein the container handling station `s support doors are closed;
Fig. 6A shows a perspective view of a second storage system comprising a second container handling station configured to move one or more containers in and/or out of the system;
Fig. 6B shows a perspective view of the second storage system of Fig. 6A wherein the container handling station has received a transport device with one or more containers;
Fig. 7A shows a perspective view of the container handling station of Figs. 6A-6B;
Fig. 7B shows a perspective view of a container handling station, wherein the supports comprise a platform;
Fig. 8A shows a side view of a support of a container handling station in a first loading position on the support axis; and
Fig. 8B shows a side view of the support of Fig. 8A in a second raised position on the support axis.

### DETAILED DESCRIPTION

In overview, the disclosure relates to a container handling station comprising a plurality of supports. Each support is configured to hold a transport device for one or more storage containers. The plurality of supports is arranged on and configured to rotate about a vertical support axis. These features can interact to enable a more efficient flow of storage containers in and out of a system. An efficient flow of storage containers in and out of the system can be achieved by the container handing station being configured to hold a transport device for one or more storage containers. As but one result, more storage containers can enter the system at any one time as the support can hold a transport device with a stack of one or more storage containers. Each support of the container handling station can comprise features such as guiding barriers or support doors which can more efficiently guide and align a transport device within the container support. Each support can include an engagement member of platform for receiving and holding the transport device in an aligned position within the support.

The container handling station of the present disclosure can be part of an automated container storage and retrieval system further comprising a grid for storing storage containers, a container handling vehicle, a rail system and one or more storage containers. By rotating the supports about the vertical support axis, each support can rotate through to at least a container accessing position. This enables a container handling vehicle to transfer a container to a first support of the station and subsequently fetch a container from a second support of the container handling station without changing its position on the rail from a above a container accessing position. This at least has the technical effect of improving the movement efficiency of the container handling vehicle by reducing the movement required to interface with a container handling station. In other words, the container handling station enables the container handling vehicle to transfer a container to a station and receive a container from the same station without having to move This can reduce robot traffic at the edge of a storage system. Reducing the robot movement required to transfer storage containers in and out of the system can improve the efficiency of an automates storage and retrieval system.

### Automated storage and retrieval system overview

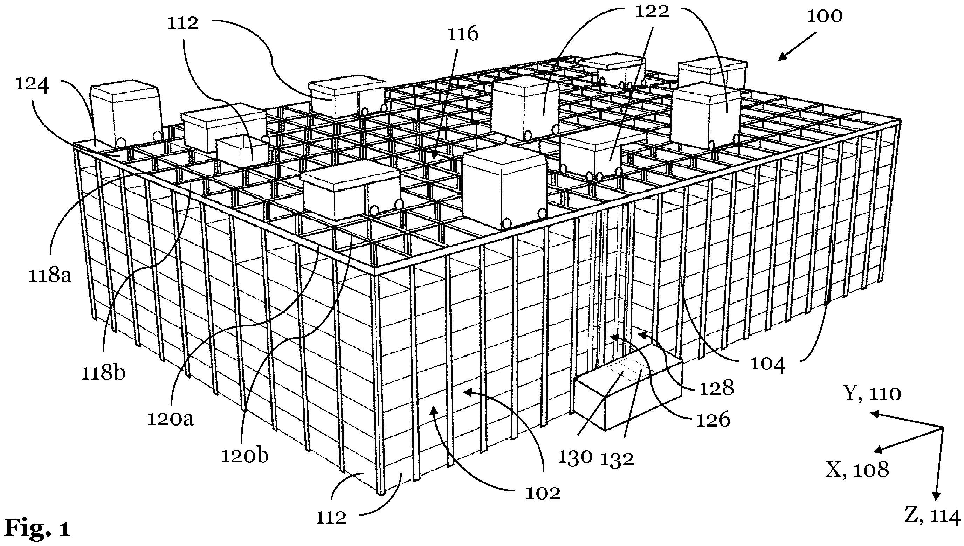

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

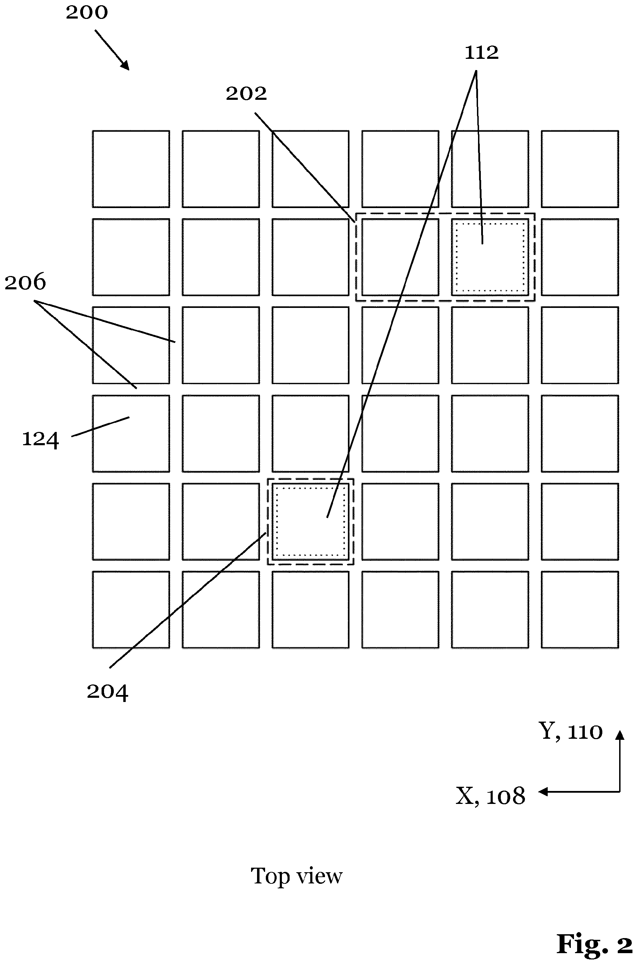

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

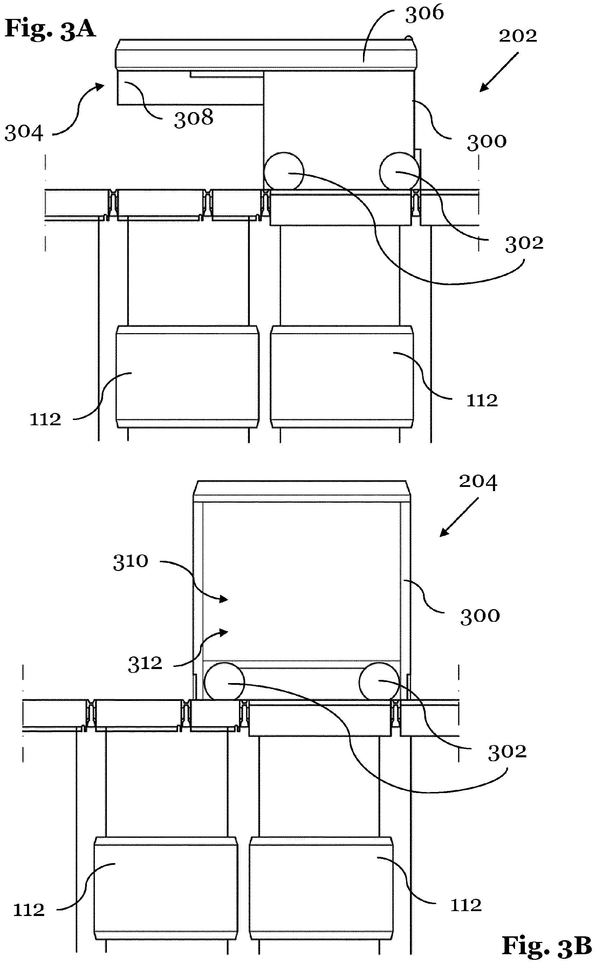

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

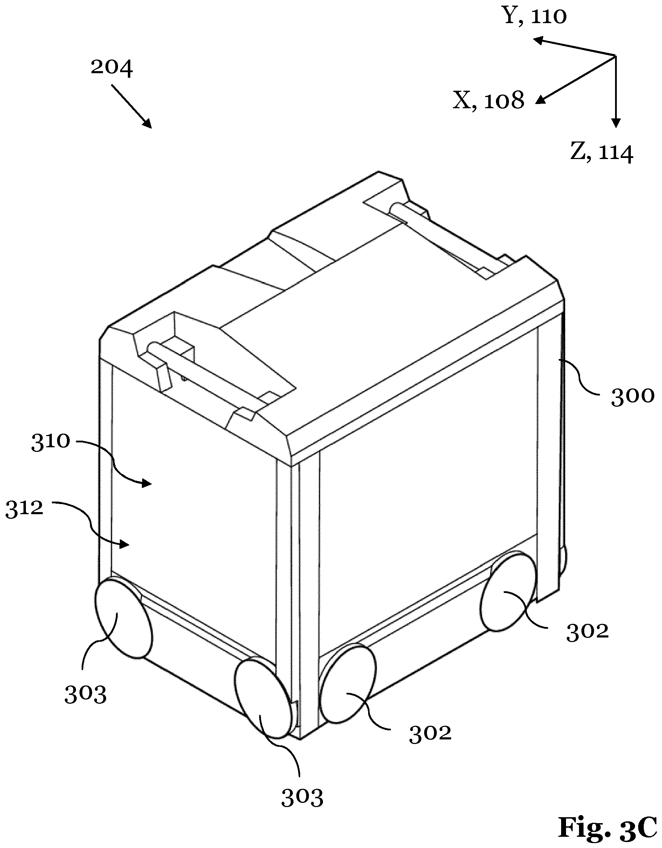

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

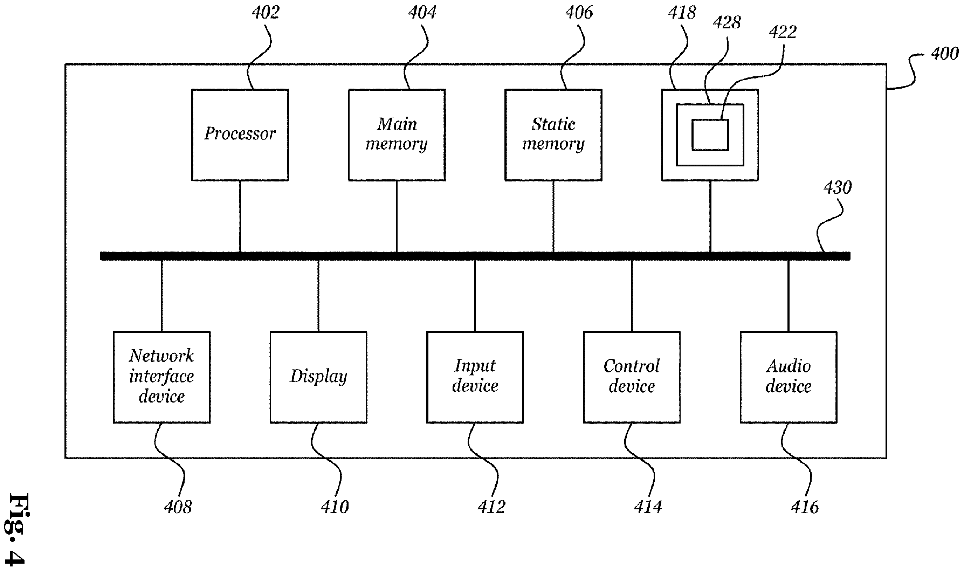

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Container handling station

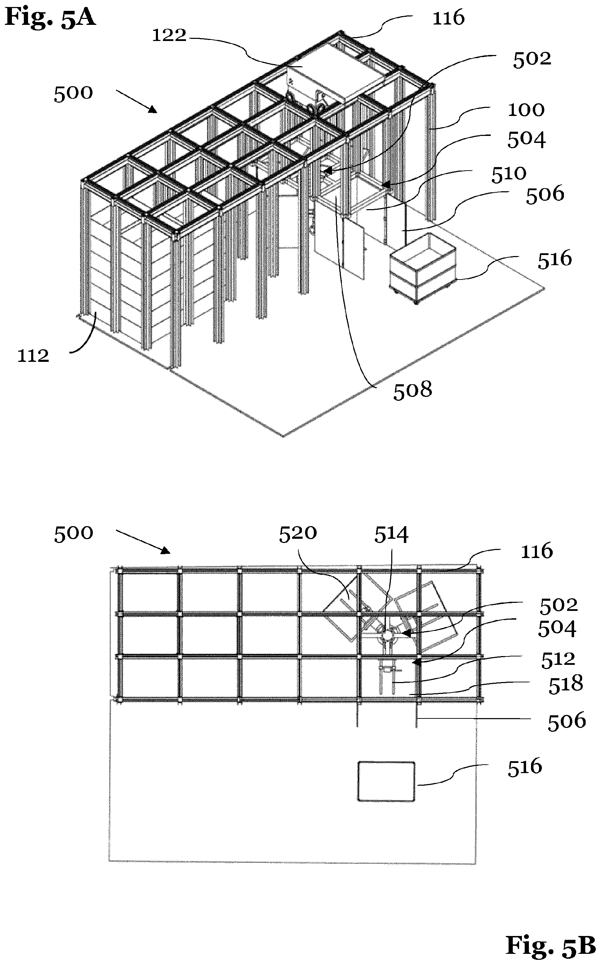

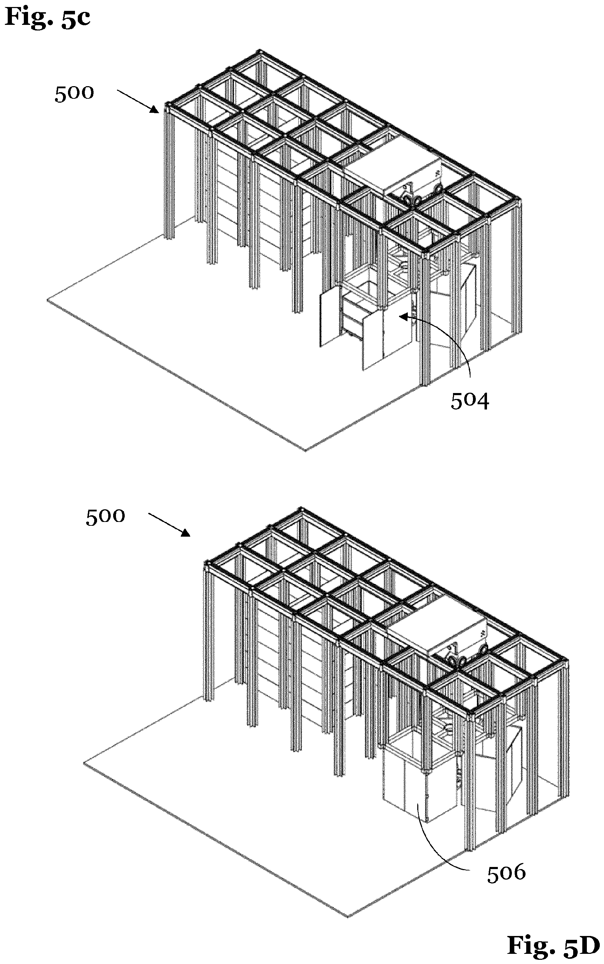

Referring to the embodiment shown in Figs. 5A-5D, an automated container storage and retrieval system 500 can comprise, as previously described with reference to Fig. 1, a grid 100, one or more storage containers or bins 112, rail system 116, robotic container-handling vehicles or robots 122. The automated container storage and retrieval system can further comprise a container handling station 502 and transport device 516.

The container handling station 502 can be completely internally located within the grid 100, as in the top view of the automated container storage and retrieval system 500 shown in Fig. 5B. In other embodiments, the container handling station 502 can partially extend or protrude from the grid 100. The rail system 116 is arranged such that the robot 122 can move above the container handling station 502. The storage containers 112 can be stored in the grid 100 in vertical stacks, moved by the robot 122, held by the container handling station 502 and/or moved by the transport device 516.

The container handling station 502 can comprise a plurality of supports 504, each support 504 configured to hold a transport device 516 for carrying and transporting one or more storage containers 112. In some examples, each support 504 is configured as a generally rectangular, horizontal planar platform. The container support 504 can hold a transport device 516 carrying one or more storage containers 112 positioned one on top of the other in a vertical stack. The container support 504 may be sized to fit a transport device 516. The container support 504 can comprise a back panel 508. The back panel 508 can be configured to be of a width marginally greater than the width of the transport device 516 and/or the storage containers 112. The back panel 508 can help keep a transport device 516 in an aligned position within the container support 504.

Each support 504 of the container handling station 502 can comprise guiding barriers 510. The guiding barriers 510 can be barriers and/or panels on two opposing lateral sides of the support 504. The guiding barriers 510 can perpendicularly extend from the back panel 508. The guiding barriers 510 can be of a height the same or marginally greater than the height of a transport device 516. The guiding barriers 510 can extend from the back panel 508 by a distance equal to or greater than the depth of a transport device 516 and/or storage container 112. The guiding barriers 510 can be positioned on the back panel 508 such that they are laterally separated by a distance wide enough to receive the width of a transport device 516 and/or storage container 112 between them. The guiding barriers 510 can guide the transport device 516 into alignment when being held and received by the support 504. The guiding barriers 510 can guide the transport device 516 into alignment with an engagement device 512 (discussed in further detail below) of the support 504.

Each support 504 of the container handling station 502 can comprise support doors 506. The support doors can connect to the guiding barriers 510 via a hinged component. The support doors can move from a first open position in which a transport device 516 can be received between the guiding barriers 510 of the support 504 of the container handling station 502 and a second closed position in which the opening between the guiding barriers 510 of the support 504 of the container handling station 502 is sealed (as shown in Fig. 5C). When in the second closed position, the support doors 506 can help keep a transport device 516 aligned and held in position within the support 504. When in the first open position, the support doors 506 can guide the transport device 516 into alignment with an engagement device 512 (discussed in further detail below) of the support 504. The support doors 506 can be moved between the first and second positions by a human operator using a handle. The set of support doors 506 can also be connected to means for actuating their opening and closing automatically such as, but not limited to, an electric or hydraulic hinge or motor. The support doors 506 can be moved between the first and second positions automatically by a control system 400, such as the control system 400 of Fig. 4.

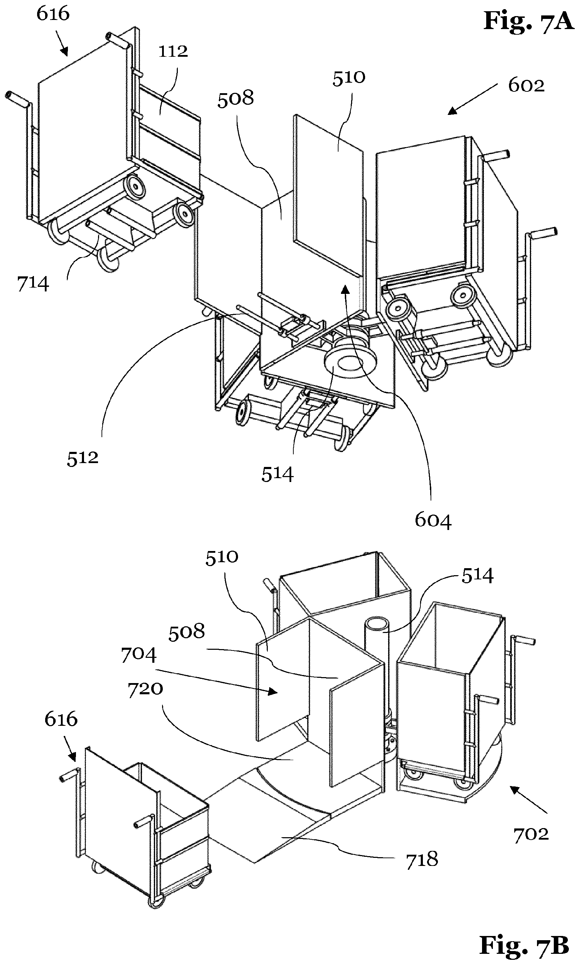

Each support 504 of the container handling station 502 can comprise an engagement device 512 (visible in Fig. 5B). The engagement device 512 can comprise any means for securely holding the transport device 516 in the support 504. The engagement device 512 can correspond to an engagement device of the transport device 516. For example, the engagement device can comprise supporting forks. The supporting forks can be one or more forks or poles which extend from the container support 504 or the back panel 508 of the support 504. The one or more forks or poles can each be parallel to each other. The supporting forks can engage with corresponding receiving tubes or holes on the undercarriage of the transport device 516 (discussed later with reference to Fig. 7A). The transport device may, for example, be formed as a pallet. In such an example, the engagement device may comprise planar forks to fit within apertures in the pallet. The engagement device 512 can ensure the transport device 516 is securely held in position within the support 504. The engagement device 512 can comprise a locking mechanism for locking the engagement device 512 to the transport device 516. The locking mechanism can be controlled by the control system 400, for example. As another example, the locking mechanism could be controlled by a human operator. The locking mechanism can help the engagement device 512 hold the transport device 516 securely in position within the support 504 whilst it is being rotated.

The plurality of supports 504 can be arranged on and configured to rotate about a vertical support axis 514 (visible in Fig. 5B). The plurality of supports 504 can be uniformly circumferentially distributed about the vertical support axis 514. Each support 504 of the plurality of supports 504 can be arranged on the support axis 514 via a perpendicularly extending arm or pole. The plurality of supports 504 can be configured to rotate about the vertical support axis 514 using a hydraulic or electrical motor. For example, at least a portion of the support axis 514 may be rotated by a motor, in turn rotating one or more of the plurality of supports 504 arranged on the support axis 514. Each container support 504 can be fully rotated around the vertical support axis 514. Each container support 504 can be rotated to one or more specific container loading positions 518 and at least one container accessing position 520. The support axis 514 can be a vertical column extending from a base component of the container handling station 502. In some embodiments, the base can comprise the means for rotating the vertical support axis 514. The plurality of supports 504 can be rotated whilst holding one or more transport devices 516.

A support 504 in a container loading position 518 is rotated to a position at the periphery of the grid 100. Said another way, a support 504 in the container loading position 518 is rotated to a position in which it can receive a transport device 516 from outside of the grid 100. In the container loading position 518 the support doors 506 can be opened to allow a transport device 516 to be received by the container support 504. The support doors 506 are closed before a support 504 leaves the container loading position 518 to prevent the support doors 506 colliding with the grid 100 during rotation. There may be more than one container loading position 518. A support 504 receiving a transport device 516 whilst in the container loading position 518 is shown in Fig. 5C.

A support 504 in a container accessing position 520 is in a position completely internally held within the grid 100 and aligned such that the robot 122 can access a storage container 112 held by the transport device 516 in the support 504 of the container handling station 502. There may be more than one container accessing position 520. For example, a first robot 122 may fetch a container 122 from a first support 504 in the first container accessing position 520 at the same time as a second robot can fetch a container from a second support 504 in a second container accessing position. The robot 122 can be seen on the rail 116 above the container accessing position 520 in Figs.5A-5D.

The transport device 516 can be a wheeled dolly or cart. The transport device 516 can comprise handles. The transport device 516 can comprise a flat loading bed for holding one or more storage containers. The transport device 516 can be an autonomous guided vehicle (AGV). The AGV could be controlled by the control system 400. The transport device 516 can be a palette. The transport device 516 could be according to the unit of NO patent application 20221274 " UNIT FOR MOVING A PLURALITY OF GOODS HOLDERS AND A METHOD OF MOVING THE PLURALITY OF GOODS HOLDERS", which is hereby incorporated by reference. The transport device 516 could be according to the assembly of NO patent application 20221276 " AN ASSEMBLY FOR TRANSPORTING A PLURALITY OF GOODS HOLDERS TO/FROM A GRID-BASED STORAGE AND RETRIEVAL SYSTEM", which is hereby incorporated by reference. The transport device 516 can comprise an engagement device corresponding to the engagement device 512 of the support 504. The transport device 516 can comprise one or more storage containers 112 being held.

### Alternate embodiment

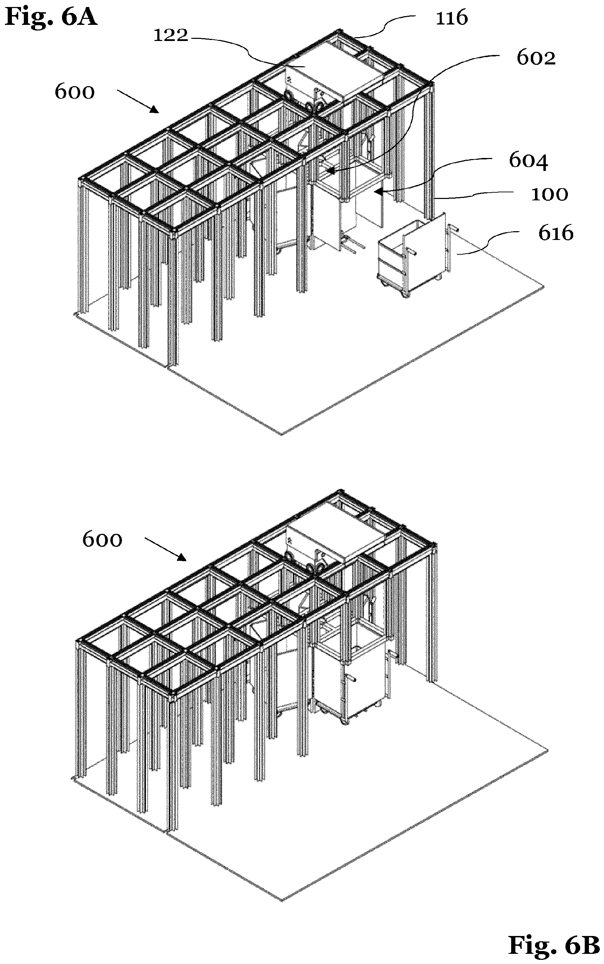

Referring to Figs. 6A, 6B, an embodiment of an automated container storage and retrieval system 600 is shown. The automated container storage and retrieval system 600 is substantially similar to the automated container storage and retrieval system 500 shown in Figs.5A-5D in that it comprises, as previously described, a grid 100, one or more storage containers or bins 112, rail system 116, robotic container-handling vehicles or robots 122, a container handling station 602 and transport device 616. However, container handling station 602 of automated container storage and retrieval system 600 does not have support doors and the transport device 616 is a wheeled dolly.

Fig. 6B shows the transport device 616 being held by a support 604 of the container handling station 600. The transport device 616 can be received such that it is completely internally held within the grid 100.

Each of the supports 604 of the plurality of container supports 604 can be different. For example, a first container support 604 of a container handling station 602 may not comprise support doors, but a second container support 604 of the same container handling station 602 may comprise support doors 506 substantially similar to those shown in Figs. 5A-5D.

Although Figs.6A-6B show embodiments with three container supports 604, this is not intended to be limiting. The container handling system 600 can include any reasonable number of container supports, for example two, three, four, or five.

### Container handling station

Fig. 7A shows a perspective bottom view of the container handling station 602 and transport device 616 of Figs. 6A, 6B. The transport device can hold one or more storage containers 112. The container handling station 602 can comprise a back panel 508, guiding barriers 510, engagement device 512 and vertical support axis 514 as previously described with regard to Figs. 5A-5D.

The transport device 616 can comprise an engagement device 714 configured to engage with a respective engagement device 512 of the container handling station 602. For example, shown are two parallel tubes 714 extending on the bottom of the transport device 616 configured to receive the engagement device 512 of the support 604. The engagement device 512 can comprise supporting forks. The supporting forks can support underneath a transport device 616 regardless of whether the transport device 616 has a corresponding engaging device 714. The engagement device 512 can be adjustable as to change the separation between the extending poles or forks of the supporting forks in order to better support different transport devices 616. The engagement device 512 can be adjusted in order to rescind the engagement so it disengages with a transport device 516. The engagement device 512 can be adjusted manually or automatically, for example by using the control system 400 presented in Fig. 4.

Fig. 7B shows a perspective top view of a system comprising a container handling station 702, transport device 616 and ramp 718. The container handling station 702 is substantially similar to the container handling station 602 of Figs 6A, 6B, 7A in that it can comprise a vertical support axis 514, back panel 508, and guiding barriers 510 as previously described. However, container handling station 702 comprises a plurality of supports 704 each formed as a platform 720 and no engagement device 512.

The platform 720 can be larger than the wheel base of the transport device 616. The platform 720 can be attached to the back panel 508 of the container support 704. The platform 720 can comprise a locking mechanism for locking movement of a transport device 616 held upon it. For example, the locking mechanism can comprise magnetic or electromagnetic means for locking the wheels of the transport device 616. The locking mechanism could be controlled by a control system 400. The platform 720 of each support 704 can be arranged to engage with a ramp 718 when the support 704 is in a container loading position. To allow rotation of the platform, a curved outer edge is provided to the platform 720 which corresponds with a curved edge on ramp 718. The platform 720 may be at a height above floor level as to not collide with the floor during rotation. The platform 720 and the ramp 718 can be used to movea transport device 616 from floor level to a raised level to be received by a support 704.

### Lifting mechanism

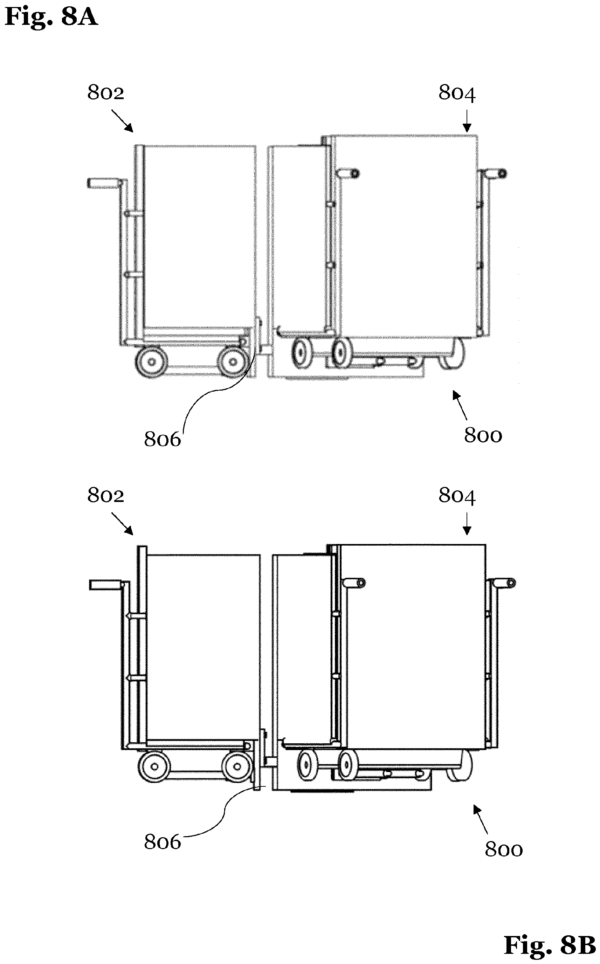

Figs. 8A, 8B show a side view of a container handling station 800 holding a first transport device 802 and a second transport device 804. The container handling system 800 can be seen to be substantially similar to the container handling station 600 of Figs. 6A, 6B, 7A.

In Figs. 8A-8B the support 806 holding the first transport device 802 is movably connected to a vertical support axis and associated with lifting means to raise and lower the support on the vertical support axis. The lifting means can comprise a hydraulic or electrical motor, for example a worm gear motor or belt. The lifting means may be controlled by a control system 400 as shown in Fig. 4.

In Fig. 8A the support 806 is shown in a first loading position on the vertical support axis. In the first loading position on the vertical support axis, the support 806 is at a height in which it can receive the transport device 802. The support can be raised by the associated means for lifting the support 806 on the vertical support axis whilst holding a transport device 802.

In Fig. 8B the support 806 is in a second raised position on the vertical support axis. The support 806 can be raised to the second raised position on the vertical support axis so that the wheels of a transport device 802 held by the support 806 do not interfere with the floor when the support 806 is being rotated around the vertical support axis.

It can be appreciated from Figs. 8A, 8B that the first transport device 802 and second transport device 804 can be at different positions on the vertical support axis. That is to say each support 806 may be independently raised or lowered.

### Method for handling storage containers

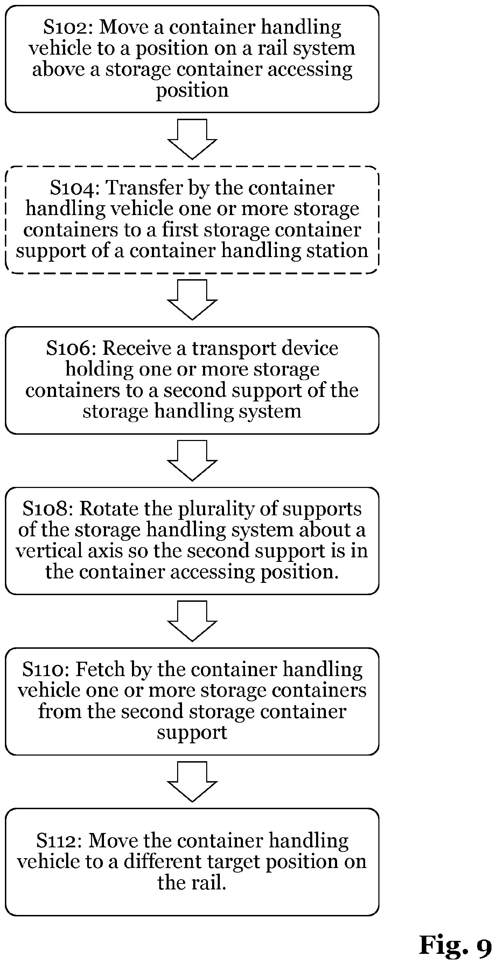

A method for handing one or more storage containers within an automated storage container handling and retrieval system of the present disclosure will now be described with reference to Fig. 9. The sequential order provided for the given method steps is illustrative and is not intended to be limiting to the scope of protection. It will be appreciated that features may be omitted from the method 900 presented in Fig. 9 without departing from the scope of the invention.

In S102, a container handling vehicle 122 moves to a position on a rail system 116 above a storage container accessing position 520. The rail system 116 can be rail system 116 shown in Fig. 2 for example. The container handling vehicle 122 can be the robot 122 shown in Fig. 3A or Fig. 3B for example.

In s104, the container handling vehicle 122 transfers one or more storage containers 112 to a first storage container support 604 of a container handling station 602. The one or more storage containers 112 can be stored one on top of another in a vertical stack. The container handling vehicle 122 may use a port column 126, 128 in order to transfer the storage container 112 to the container handling station 602. The container handling vehicle 122 may use a gripper to lower the one or more storage containers 112 to the support 604 of the container handling station 602.

In s106, the automated storage container handling and retrieval system 600 can receive a transport device 616 holding one or more storage containers 112 to a second support 604 of the container handling station 602. The transport device 616 can be received using an engagement device 5012. The transport device 616 can be received using a ramp 718 and platform 720. Receiving the transport device 616 can further comprise lowering a second support 604 of the container handling station 602 on the vertical support axis 514 into a first loading position 518. Receiving the transport device 516 can further comprise opening a set of support doors 506. Receiving a transport device 516 can further comprise enabling a locking mechanism of an engagement device 512 or platform 720 to hold the transport device 616 in an aligned position within the support 604. Receiving a transport device 616 can further comprise guiding, using the guiding barriers 510, the transport device 616 into an aligned position within the container support 604. The aligned position can be one in which the transport device 616 is in alignment with the engagement device 512 and/or in an alignment in which it is arranged to be accessed by the robot 122.

In s108, the container handling station 602 can rotate the plurality of supports 604 about a vertical support axis 514 until the second support 604 is in the container accessing position 520. Rotating the plurality of supports 604 can further comprise raising one or more of the plurality of supports 604 on the vertical support axis 514 to a second raised position. A support 604 in the second raised position is configured to hold a transport device 616 off the ground. Rotating the plurality of supports 604 can further comprise shutting a set of support doors 506.

In S110, the container handling vehicle 122 can fetch one or more storage containers 112 from the second storage container support 604. Fetching one or more storage containers 112 can comprise lowering, lifting, or otherwise moving an engagement device of the robot 122. The engagement device of the robot 122 can be a gripper. The robot 122 can use a port column 126, 128 to fetch the one or more storage containers 122 from the container handling station 602. The container handling vehicle 122 can fetch the storage containers 112 from the transport device 616 held on the second support 604 of the container handling station 602. The container handling vehicle 122 can fetch the one or more storage containers 122 to the top of the grid 100.

In S112, the container handling vehicle 122 can move to a different target position on the rail 116 with the one or more storage container 112 it fetched. The target position may be above a different container handling station 602. The target position may be anywhere on the rail 116 along the top of the grid 100.

It will be understood that containers 112 can be returned to a container support 604 by a container handling vehicle 122. Also, a transport device 616 can be rotated on the container handling station so that the transport device 616 and any containers 112 stacked thereon may be removed from the container handling station.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A container handling station, the container handling station comprising:
a plurality of supports, each support configured to hold a transport device for one or more storage containers;
the plurality of supports arranged on and configured to rotate about a vertical support axis.

2. A container handling station according to claim 1, wherein each of the plurality of supports comprises a platform.

3. A container handling station according to claim 1 or 2, wherein each of the plurality of supports comprises guiding barriers on two opposing lateral sides; and optionally, a set of support doors.

4. A container handling station according to any preceding claim wherein the plurality of supports are uniformly arranged around the circumference of the vertical support axis.

5. A container handling station according to any preceding claim, wherein each of the plurality of supports comprises an engagement device for engaging with said transport device.

6. A container handling station according to claim 5 wherein the engagement device comprises supporting forks.

7. A container handling station according to any preceding claim, further comprising a ramp for raising the transport device to a predetermined height as the transport device is moved towards the container handling system.

8. A container handling station according to any preceding claim, wherein each support has an associated lifting means to raise and lower the support on the support axis.

9. An automated container storage and retrieval system comprising:
a grid for storing containers;
a container handling vehicle comprising a gripper;
a rail system arranged such that a container handling vehicle can move above the container handling system; and
a container handling station of any of the preceding claims.

10. An automated container storage and retrieval system according to claim 9, wherein the container handling station is arranged at least partially within the grid.

11. A container handling station according to any of claims 1 to 8 or an automated container storage and retrieval system according to claim 9 or 10, wherein the transport device is one of:
a wheeled cart;
a wheeled dolly; and
an autonomous guided vehicle (AGV).

12. A method of handling a storage container stack stored in an automated container storage and retrieval system according to any one of claims 9 to 11, wherein the method comprises the following steps:
receiving a transport device holding one or more storage containers on a first support of the container handling station; and
rotating the plurality of supports about said vertical axis so the first support is rotated into a container accessing position.

13. A method of handling a storage container stack according to claim 12, further comprising the steps of:
moving a container handling vehicle to a position on a rail system above the storage container accessing position;
fetching by the container handling vehicle one or more storage containers from the storage container support; and
moving the container handling vehicle to a different target position on the rail.

14. A method of handling a storage container stack according to claim 12 or 13, wherein the method further comprises moving the first support on the support axis to a first loading position wherein the support is configured to receive a transport device.

15. A method of handling a storage container stack according to any of claims 12-14, wherein the method further comprises transferring by the container handling vehicle one or more storage containers to a second support of the storage handling station.
